# EUROPÄISCHE PATENTSCHRIFT

(11) **EP 2 866 056 B1**
(45) Veröffentlichungstag und Bekanntmachung des Hinweises auf die Patenterteilung: **22.06.2016**
(21) Anmeldenummer: 14190463.1
(22) Anmeldetag: 27.10.2014
(51) Int. Cl.: G01T 1/20

(54) **Messvorrichtung und Fluidikvorrichtung zum Messen einer Menge einer zu untersuchenden Substanz**
Measuring device and fluidic device for measuring a quantity of a substance to be analysed
Dispositif de mesure et dispositif fluidique destinés à mesurer une quantité d'une substance devant être examinée

(30) Priorität: 28.10.2013 DE 102013221883
(43) Veröffentlichungstag der Anmeldung: 29.04.2015
(73) Patentinhaber: Fraunhofer-Gesellschaft zur Förderung der angewandten Forschung e.V., 80686 München (DE); Technische Universität Berlin, 10623 Berlin (DE)
(72) Erfinder: Jung, Erik, 14612 Falkensee (DE); Georgi, Leopold, 12161 Berlin (DE); Kubick, Stefan, 14129 Berlin (DE)
(74) Vertreter: Pfenning, Meinig & Partner mbB

(56) Entgegenhaltungen:
- EP-A1- 0 058 230
- EP-A2- 2 056 127
- US-A- 4 271 139
- VON GEORGI L ET AL: "Anwendungen hydrophober Oberflächenmodifikationen in der Mikrosystemtechnik = Applications of hydrophobic surface modifications in microsystem technology", GALVANOTECHNIK, EUGEN G.LEUZE VERLAG, SAULGAU/WURTT, DE, Bd. 104, Nr. 9, 1. August 2013 (2013-08-01), Seiten 1864-1872, XP001525927, ISSN: 0016-4232

## Beschreibung

Die vorliegende Erfindung betrifft eine Messvorrichtung und eine Fluidikvorrichtung zum Messen einer Menge einer zu untersuchenden Substanz, die mit einem radioaktiven Material markiert ist.

Vorrichtungen zum Messen einer radioaktiven Strahlung sind aus dem Stand der Technik bekannt. Szintillationsdetektoren beispielsweise erfassen ionisierende Strahlung und sind daher in der Lage, Radioaktivität zu messen. Atome der Szintillatoren der Szintillationsdetektoren werden durch die Energie der ionisierenden Strahlung angeregt und emittieren diese Energie anschließend in Form eines messbaren Lichtblitzes. Eine wichtige Anwendung ist dabei eine Detektion von radioaktiv markierten Molekülen, wie sie häufig im Bereich der Biochemie angewendet wird. Eine Beispielanwendung ist hierbei die Quantifizierung von synthetisierten Proteinen. Hierfür wird eine Aminosäure radioaktiv markiert, diese dann in die Proteine synthetisiert und schließlich im Szintillationsdetektor ausgezählt. So offenbart beispielsweise die Druckschrift US 4 271139 A einen Aufbau, bei dem eine Szintillation in einem Partikel durch eine radioaktive Anregung veranlasst wird und der Lichtblitz nachfolgend auf einem Detektor erfasst wird.

Derzeitige Szintillationsdetektoren verwenden glasfasergekoppelte Photomultiplikatoren, um die Lichtblitze aus dem Szintillationsmaterial zu detektieren. Nachteilig hieran ist, dass mehrere Bauteile verwendet werden müssen, was die Kosten für den Szintillationsdetektor in die Höhe treibt, den Aufbau des Detektors verkompliziert und einer Verkleinerung der Detektoren enge Grenzen setzt.

Es ist daher die Aufgabe der vorliegenden Erfindung, eine Messvorrichtung zum Messen einer Menge einer mit einem radioaktiven Material markierten, zu untersuchenden Substanz vorzuschlagen, die die vorstehend genannten Nachteile überwindet, die also kompakt und preisgünstig hergestellt werden kann.

Diese Aufgabe wird gelöst durch eine Messvorrichtung nach Anspruch 1 sowie eine Fluidikvorrichtung nach Anspruch 13. Vorteilhafte Ausgestaltungen und Weiterbildungen sind in den abhängigen Ansprüchen beschrieben.

Eine Messvorrichtung zum Messen einer Menge einer zu untersuchenden Substanz, die mit einem radioaktiven Material markiert ist, umfasst einen durch Wände eingefassten Aufnahmeraum. Der Aufnahmeraum dient zum Aufnehmen einer Flüssigkeit, die die zu untersuchende Substanz umfasst. Die Messvorrichtung umfasst außerdem ein Szintillationsmaterial zum Umwandeln einer von dem radioaktiven Material ausgehenden ionisierenden Strahlung in eine Messstrahlung. Ferner weist die Messvorrichtung eine lichtempfindliche Aufnahmeeinheit zum Detektieren einer Intensität der Messstrahlung auf. Die lichtempfindliche Aufnahmeeinheit ist als Halbleiterelement mit einer flächig ausgedehnten Oberfläche ausgebildet. Das Szintillationsmaterial hat eine der Flüssigkeit zugewandte, flächig ausgedehnte Oberfläche, wobei die lichtempfindliche Aufnahmeeinheit und das Szintillationsmaterial einander gegenüberliegend an jeweils einer der Wände angeordnet sind. Alternativ können die lichtempfindliche Aufnahmeeinheit und das Szintillationsmaterial übereinanderliegend an einer der Wände angeordnet sein.

Durch die radioaktive Markierung der Substanz kann durch Messen einer Menge der ionisierenden Strahlung auf die Menge der zu untersuchenden Substanz rückgeschlossen werden, so dass eine quantitative Messung vorliegt. Diese Mengenmessung erfolgt durch die Umwandlung der ionisierenden Strahlung in eine optische Messstrahlung durch das Szintillationsmaterial. Da die Aufnahmeeinheit eine flächig ausgedehnte Oberfläche aufweist, kann ein Großteil der von dem Szintillationsmaterial erzeugten Messstrahlung auch erfasst werden, wobei durch die flächig ausgedehnte Oberfläche des Szintillationsmaterials auch die Wahrscheinlichkeit für die Erzeugung von Messstrahlungen durch radioaktive Strahlung steigt. Aufgrund der spezifischen Anordnung der Aufnahmeeinheit und des Szintillationsmaterials an gegenüberliegenden Wänden bzw. übereinanderliegend an einer der Wände kann eine kompakte Bauform der Messvorrichtung mit geringen Abständen zwischen einzelnen Bauteilen gewährleistet werden. Insbesondere bei übereinanderliegender Anordnung der Aufnahmeeinheit und des Szintillationsmaterials kann durch den minimalen Abstand zwischen den genannten Bauteilen die Messvorrichtung sehr klein gebaut werden. Die Messstrahlung kann hierbei in einem optisch wahrnehmbaren Wellenlängenbereich von 300 nm bis 800 nm, alternativ oder zusätzlich aber auch im ultravioletten Wellenlängenbereich von 150 nm bis 300 nm, aber auch im infraroten Wellenlängenbereich von 800 nm bis 50 µm liegen.

Das Szintillationsmaterial kann einen Kristall, einen Lack oder eine Folie umfassen und liegt der Aufnahmeeinheit vorzugsweise fluchtend gegenüber, es kann jedoch auch vorgesehen sein, dass die Aufnahmeeinheit in ihren Abmessungen größer als das Szintillationsmaterial ist.

Die den Aufnahmeraum begrenzenden Wände sind vorzugsweise aus einem Material, das transparent bzw. durchlässig für die Messstrahlung ist, diese also nur zu geringen Teilen absorbiert oder reflektiert. Typischerweise sind die Wände auch durchsichtig bzw. durchlässig für die radioaktive Strahlung. Hierdurch kann ein zuverlässiger Nachweis der Menge der zu untersuchenden Substanz erfolgen.

Es kann vorgesehen sein, dass die zu untersuchende Substanz als Suspension mit der Flüssigkeit ausgebildet ist. Hierdurch bleibt die zu untersuchende Substanz als Festkörper präsent und kann durch die Flüssigkeit dennoch einfach weiter transportiert werden.

Die lichtempfindliche Aufnahmeeinheit ist typischerweise zum gleichzeitigen Messen der Menge und einer Position der zu untersuchenden Substanz eingerichtet. Die Intensität der Messstrahlung kann hierbei an mehreren, auf der lichtempfindlichen Aufnahmeeinheit räumlich verteilten Messpunkten erfasst werden. Hierdurch erhält man eine Kombination aus Ortsinformationen und Produktinformationen, wie der quantitativen Erfassung der zu untersuchenden Substanz und deren Aufenthaltsort. Somit werden durch die Ortsauflösung auch die Eigenschaften der zu untersuchenden Substanz detektiert.

Es kann vorgesehen sein, dass eine Auswerteeinheit zum Berechnen der Menge und einer lokalen Verteilung der zu untersuchenden Substanz aus der an den Messpunkten erfassten Intensität der Messstrahlung vorgesehen ist. Durch die Auswerteeinheit werden die erfasste Ortsinformation sowie die erhaltenen Informationen über Eigenschaften der zu untersuchenden Substanz entweder direkt weiterverarbeitet oder für eine Weiterverarbeitung bereitgestellt.

Typischerweise ist das Szintillationsmaterial direkt als Schicht auf die lichtempfindliche Aufnahmeeinheit aufgebracht, wobei das Szintillationsmaterial und die lichtempfindliche Aufnahmeeinheit direkt, also unmittelbar übereinanderliegend, d. h. in unmittelbarem berührendem Kontakt an einer der Wände angeordnet sind. Hierdurch wird ein Abstand zwischen dem Szintillationsmaterial und der Aufnahmeeinheit minimiert, ferner wird auch ein Abstand zwischen der Flüssigkeit und dem Szintillationsmaterial durch die direkte Anbringung an der Wand minimiert. Die Ausgestaltung als Schicht, die typischerweise eine geschlossene Oberfläche ohne Löcher aufweist, sorgt für eine geschlossene Oberfläche, so dass die von der radioaktiven Bestrahlung hervorgerufenen Ereignisse auch detektiert werden können.

Die lichtempfindliche Aufnahmeeinheit und bzw. oder das Szintillationsmaterial können eine Abdeckung des Aufnahmeraums gegen ein Austreten der Flüssigkeit bilden. Hierdurch wird auf den Einsatz weiterer Bauteile verzichtet, was die Kosten wiederum senkt und eine kleinbauende Ausführung ermöglicht.

Typischerweise ist ein Abstand zwischen der der Flüssigkeit zugewandten Oberfläche des Szintillationsmaterials und der Flüssigkeit kleiner oder gleich einem Abstand zwischen der der Flüssigkeit zugewandten Oberfläche der lichtempfindlichen Aufnahmeeinheit und der Flüssigkeit. Dies erlaubt ebenfalls eine sehr kleinbauende Bauweise der Messvorrichtung, wobei der Abstand auch null betragen kann, die jeweiligen Bauelemente also direkt mit der Flüssigkeit in Kontakt stehen.

Anschlüsse des Halbleiterelements, welches die lichtempfindliche Aufnahmeeinheit bildet, können als eine Durchkontaktierung ausgeführt sein, um ein zeitaufwendiges und somit kostentreibendes Bonden zu vermeiden und somit die Messvorrichtung insgesamt kleiner zu halten. Vorzugsweise liegt eine Siliziumdurchkontaktierung vor. Alternativ kann natürlich auch eine Verbindung über konventionelles Drahtbonden erfolgen. Typischerweise werden mehrere der auf der Aufnahmeeinheit räumlich verteilten Messpunkte, beispielsweise Pixel, durch so genanntes "Binning" zusammengefasst, um die Empfindlichkeit zu erhöhen, selbst wenn die Ortsauflösung dadurch verringert werden sollte. Dies kann soweit gehen, dass die Aufnahmeeinheit zur Einzelphotonendetektion eingerichtet ist.

Die Messvorrichtung umfasst typischerweise einen Trägerkörper, in den der Aufnahmeraum eingearbeitet ist, wobei benachbart zum Aufnahmeraum der Trägerkörper eine Ausnehmung aufweist. In der Ausnehmung sind die lichtempfindliche Aufnahmeeinheit und/oder das Szintillationsmaterial aufgenommen. Durch die Ausnehmungen kann der Trägerkörper schnell und kostengünstig produziert werden und gleichzeitig ohne eine mühsame genaue Anpassung die Aufnahmeeinheit bzw. das Szintillationsmaterial in der Ausnehmung passend positioniert werden. Typische Materialien für den Trägerkörper umfassen hierbei Polymethylmethacrylat (PMMA), also Plexiglas, Polyethylen (PE), Polycarbonat (PC) oder Cyclo-Olefin-Copolymere (COC) bzw. Cyclo-Olefin-Polymere (COP).

Sofern der Trägerkörper aus einem für die optisch wahrnehmbare Strahlung transparentem Material besteht, wird dieser typischerweise in ein für die genannte Strahlung undurchlässiges Gehäuse eingesetzt, um beispielsweise unerwünschte Störstrahlung zu blockieren. Der Trägerkörper selbst kann aus einem für optisch wahrnehmbare Strahlung undurchlässigen Material bestehen oder dieses zumindest umfassen, falls zwischen dem Szintillationsmaterial und der lichtempfindlichen Aufnahmeeinheit kein Teil des Trägerkörpers angeordnet ist oder dieser dazwischen angeordnete Teil aus einem für die Messstrahlung transparenten Material ist. Vorzugsweise wird hierbei hochgefülltes Epoxidharz verwendet.

Auf der Aufnahmevorrichtung können optische Elemente, vorzugsweise Mikrolinsen, angeordnet sein, um die Messstrahlung auf der Aufnahmeeinheit zu bündeln. Hierdurch wird die Empfindlichkeit der Detektion weiter erhöht.

Die radioaktive Substanz kann ¹⁴C umfassen, wobei das Szintillationsmaterial zur Detektion von β-Strahlung eingerichtet ist und bzw. oder die zu untersuchende Substanz ein synthetisiertes Protein umfasst und das radioaktive Material eine radioaktiv markierte Aminosäure ist, die in das Protein synthetisiert ist. Vorzugsweise ist die zu untersuchende Substanz in einem oder mehreren Vesikeln agglomeriert oder liegt als ans Protein gebundenes Atom vor. Durch die Verwendung von ¹⁴C als Kohlenstoffisotop wird ein gängiger radioaktiver Marker verwendet, der β-Strahlen aussendet, die wiederum leicht nachgewiesen werden können. Durch Vesikel können unterschiedliche Oberflächenbelegungen erzeugt und durch die Messvorrichtung ortsaufgelöst nachgewiesen werden.

Die lichtempfindliche Aufnahmeeinheit weist typischerweise ein Empfängerarray auf und ist vorzugsweise als CCD-Element (Charge-Coupled Device), CMOS-Element (Complementary Metal Oxide Semiconductor), sCMOS-Element (scientific Complementary Metal Oxide Semiconductor), Avalanche-Diodenelement oder Photomultiplikator, vorzugsweise als Mikrophotomultiplikator ausgebildet. Die lichtempfindliche Aufnahmeeinheit kann ein Kamerachip sein. Somit wird eine zuverlässige Detektion gewährleistet und gleichzeitig ein zuverlässig funktionierendes Bauteil für die Aufnahmeeinheit bereitgestellt.

Ein Volumen des Aufnahmeraums kann im mm³-Bereich liegen, typischerweise zwischen 1 mm³ und 10 mm³, vorzugsweise zwischen 2,5 mm³ und 7,5 mm³, besonders vorzugsweise zwischen 3 mm³ und 6 mm³, wobei eine Breite des Aufnahmeraums und eine Höhe des Aufnahmeraums typischerweise nicht mehr als 1 mm betragen. Eine Dicke des Szintillationsmaterials liegt bei maximal 100 µm, vorzugsweise zwischen 10 µm und 90 µm, besonders vorzugsweise zwischen 20 µm und 80 µm, sofern ein Lack verwendet wird, und bei mehr als 100 µm, falls ein Film oder ein Kristall als Szintillationsmaterial verwendet wird. Durch die genannten Abmessungen wird eine kompakte Messvorrichtung realisiert.

Eine Fluidikvorrichtung umfasst die bereits beschriebene Messvorrichtung, wobei die Fluidikvorrichtung vorzugsweise einen Tropfenreaktor oder einen Kanalreaktor aufweist. Unter dem Begriff "Fluidikvorrichtung" soll hierbei eine Vorrichtung verstanden werden, in der Fluide, typischerweise Flüssigkeiten, geführt und analysiert werden können. Die Fluidikanordnung ist typischerweise ein Plättchen aus Plastik mit mehreren Kanälen, die die Flüssigkeit führen und den Aufnahmeraum bilden. Eine Breite der Kanäle kann zwischen 100 µm und 2 mm, vorzugsweise zwischen 300 µm und 1000 µm liegen. Es kann ferner vorgesehen sein, dass die Fluidikvorrichtung einen Mikroreaktor umfasst, in dem eine Reaktion stattfindet, die durch eine unterschiedliche Menge der zu untersuchenden Substanz durch die Messvorrichtung nachgewiesen werden kann.

Ausführungsbeispiele der Erfindung sind in den Zeichnungen dargestellt und werden nachfolgend anhand der Figuren 1 bis 10 erläutert.

Es zeigen:
- Fig. 1: einen Querschnitt durch eine Messvorrichtung mit einer Ausnehmung eines Trägerkörpers, in dem ein Szintillationsmaterial und eine Aufnahmeeinheit angeordnet sind;
- Fig. 2: eine Fig. 1 entsprechende Ansicht der Messvorrichtung, bei der das Szintillationsmaterial an einer Abdeckung der Messvorrichtung angeordnet ist;
- Fig. 3: eine Fig. 1 entsprechende Ansicht der Messvorrichtung, bei der die Szintillationsschicht auf der Aufnahmeeinheit in direktem Kontakt mit der Flüssigkeit angeordnet ist;
- Fig. 4: eine Fig. 3 entsprechende Darstellung der Messvorrichtung, bei der die Szintillationsschicht durch eine Klebeverbindung mit dem Trägerkörper verbunden ist;
- Fig. 5: eine Fig. 1 entsprechende Ansicht der Messvorrichtung, bei der sowohl das Szintillationsmaterial als auch die Aufnahmeeinheit in direktem Kontakt mit der Flüssigkeit stehen;
- Fig. 6: eine Fig. 1 entsprechende Ansicht der Messvorrichtung, bei der die Aufnahmeeinheit durch eine Drahtbondverbindung mit weiteren Bauteilen in Verbindung steht;
- Fig. 7: eine Fig. 5 entsprechende Ansicht der Messvorrichtung, bei der die Drahtbondverbindung, die Aufnahmeeinheit und die Szintillationsschicht in einem Gehäuse enthalten sind, und an einer Unterseite des Gehäuses weitere Bauteile zur elektrischen Kontaktierung vorgesehen sind;
- Fig. 8: eine Fig. 1 entsprechende Ansicht der Messvorrichtung mit einer Siliziumdurchkontaktierung der Aufnahmeeinheit;
- Fig. 9: einen Querschnitt der Messvorrichtung, bei der das Szintillationsmaterial und die Aufnahmeeinheit abgewinkelt gegeneinander angeordnet sind und die Flüssigkeit mit der zu untersuchenden Substanz zwischen den genannten Bauteilen gehalten ist und
- Fig. 10: eine Draufsicht auf eine Fluidikvorrichtung mit der Messvorrichtung.

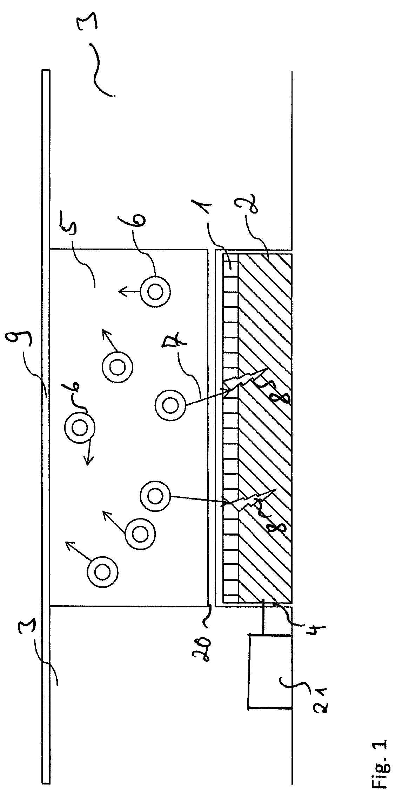

Fig. 1 zeigt in einem Querschnitt die Messvorrichtung, die ein Szintillationsmaterial 1 und eine Aufnahmeeinheit 2 umfasst. Das Szintillationsmaterial 1 ist ein szintillierender Lack, der direkt auf und somit in unmittelbarem Kontakt mit der Aufnahmeeinheit 2 aufgebracht wurde und ebenso wie die Aufnahmeeinheit 2 eine flächig ausgedehnte Oberfläche aufweist, wobei Abmessungen dieser Oberfläche deutlich größer als eine Dicke des jeweiligen Bauteils sind. Die Aufnahmeeinheit 2 ist ein CMOS-Chip als Empfängerarray, der mit einer Auswerteeinheit 21, beispielsweise einer Recheneinheit wie einem Computer, über ein Kabel in Verbindung steht. Das Szintillationsmaterial 1 und die Aufnahmeeinheit 2 sind in einem Trägerkörper 3 der Messvorrichtung gehalten, der aus Polymethylmethacrylat besteht. In weiteren Ausführungsformen kann der Trägerkörper 3 natürlich auch andere Stoffe umfassen, sofern diese durchlässig für eine Messstrahlung sowie eine ionisierende Strahlung sind. Der Trägerkörper 3 weist an seiner Unterseite eine eingefräste Ausnehmung 4 auf, in die die Aufnahmeeinheit 2 und das Szintillationsmaterial 1 eingebracht sind. In den Trägerkörper 3 eingebracht ist ebenso die Auswerteeinheit 21, diese kann in weiteren Ausführungsbeispielen aber auch räumlich getrennt von dem Trägerkörper angeordnet sein.

Der Ausnehmung 4 fluchtend gegenüberliegend ist ein in den Trägerkörper 3 eingefräster Aufnahmeraum 5 angeordnet, der durch mehrere Wände des Trägerkörpers 3 begrenzt wird. Eine Breite der Ausnehmung 4 entspricht einer Breite des Aufnahmeraums 5. Die horizontal verlaufende Wand 20 als eine der Wände, die den Aufnahmeraum 5 begrenzen, trennt den Aufnahmeraum 5 von dem Szintillationsmaterial 1, welches dem Aufnahmeraum 5 unmittelbar benachbart angeordnet ist. In dem Aufnahmeraum 5 ist eine Suspension geführt, in der das zu untersuchende Material, ein synthetisiertes Protein, in Vesikeln 6 agglomeriert ist. Das synthetisierte Protein ist mit einem radioaktiven Material, in dem in Fig. 1 dargestelltem Ausführungsbeispiel ¹⁴C, markiert, welches durch Aussenden von β-Strahlung 7 zerfällt. Sofern die β-Strahlung 7 auf eine der Flüssigkeit zugewandte flächig ausgedehnte Oberfläche das Szintillationsmaterials 1 trifft, wird hierbei ein Lichtblitz 8 erzeugt. Sofern der Lichtblitz 8 in den unterhalb des Szintillationsmaterials 1 liegenden Halbraum abgegeben wird, kann die Aufnahmeeinheit 2 in dem in Fig. 1 dargestellten Ausführungsbeispiel diesen Lichtblitz 8 detektieren, sobald er auf eine dem Sznitillationsmaterial 1 zugewandte Oberfläche der lichtempfindlichen Aufnahmeeinheit 2 auftrifft. Durch die Detektion der Lichtblitze 8 durch die Aufnahmeeinheit 2 kann somit auf die Menge der Vesikel 6 in der Flüssigkeit rückgeschlossen werden und eine quantitative Messung der in den Vesikeln 6 agglomerierten zu untersuchenden Substanz gewährleistet sein. Die Aufnahmeeinheit 2 detektiert hierzu Intensität und Häufigkeit der Lichtblitze 8 als Messstrahlung.

In dem in Fig. 1 dargestellten Ausführungsbeispiel ist der Aufnahmeraum 5 durch eine Abdeckung 9 nach oben abgeschlossen, in weiteren Ausführungsbeispielen kann jedoch auf die Abdeckung 9 auch verzichtet werden, sofern die Flüssigkeit in dem Aufnahmeraum 5 durch Kapillarkräfte oder Gravitation gehalten wird. Bei Verwendung einer aktiven, d.h. einer druckbeaufschlagten Mikrofluidik, bei der die Flüssigkeit durch den Aufnahmeraum 5 strömt, ist die Abdeckung 9 jedoch notwendig. Die in Fig. 1 gezeigte Ausführungsform weist den Vorteil auf, dass durch die Verwendung von Lack als Szintillationsmaterial 1 eine kostengünstige Herstellung möglich ist und die Vorrichtung stets wiederverwendet werden kann. Der Aufnahmeraum 5 weist eine Breite von 1 mm und eine Höhe von 1 mm auf. In weiteren Ausführungsformen beträgt ein Aspektverhältnis nicht 1:1, sondern typischerweise 1:2, d.h. eine Höhe des Aufnahmeraums 5 ist gerade doppelt so groß wie die Breite oder umgekehrt.

Das Szintillationsmaterial 1 und die Aufnahmeeinheit 2 liegen bei dem in Fig. 1 dargestellten Ausführungsbeispiel fluchtend übereinander, es kann jedoch in weiteren Ausführungsbeispielen auch vorgesehen sein, dass die Aufnahmeeinheit 2 deutlich größere Abmessungen als das Szintillationsmaterial 1 aufweist. So beträgt die Breite des Szintillationsmaterials 1 typischerweise ebenfalls 1 mm, entspricht somit also der Breite des Aufnahmeraums 5, wobei eine Breite der Aufnahmevorrichtung 2 allgemein zwischen 0,5 cm und 1 cm liegen kann. Das in dem Aufnahmeraum 5 enthaltene Probenvolumen liegt im mm³-Bereich. Eine Dicke des Szintillationsmaterials 1 beträgt 100 µm. Die Dicke des CMOS-Chips als Aufnahmeeinheit 2 beträgt 0,5 mm. In weiteren Ausführungsbeispielen kann jedoch auch ein Avalanche-Diodenarray verwendet werden, welches eine Dicke und Höhe von 1 mm aufweist, oder es wird für die Aufnahmeeinheit 2 ein Mikro-Fotomultiplyer verwendet, der typischerweise bis zu 2 mm dick sein kann. Die in Fig. 1 dargestellte Messvorrichtung ist Teil eines lab-on-a-chip-Systems, das wiederverwendet werden kann oder als Einwegteil ausgestaltet ist.

Die Wand 20 ist wie der gesamte Trägerkörper 3 aus Polymethylmethacrylat (PMMA), also Plexiglas, kann in weiteren Ausführungsformen jedoch auch eine von dem restlichen Trägerkörper 3 verschiedene Materialzusammensetzung aufweisen. Die Dicke der Wand 20 beträgt zwischen 10 µm und 100 µm, vorzugsweise zwischen 20 µm und 80 µm, in dem in Fig. 1 dargestellten Ausführungsbeispiel 50 µm. Das in Fig. 1 dargestellte System umfasst somit einen hochintegrierten, kostengünstigen Szintillationsdetektor bestehend aus dem Szintillationsmaterial 1 und der lichtempfindlichen Aufnahmeeinheit 2 basierend auf etablierter Kamerachiptechnik auf. Es werden in dem dargestellten Ausführungsbeispiel keine weiteren optischen oder mechanischen Komponenten benötigt, was den Aufwand für solch ein Gerät minimiert.

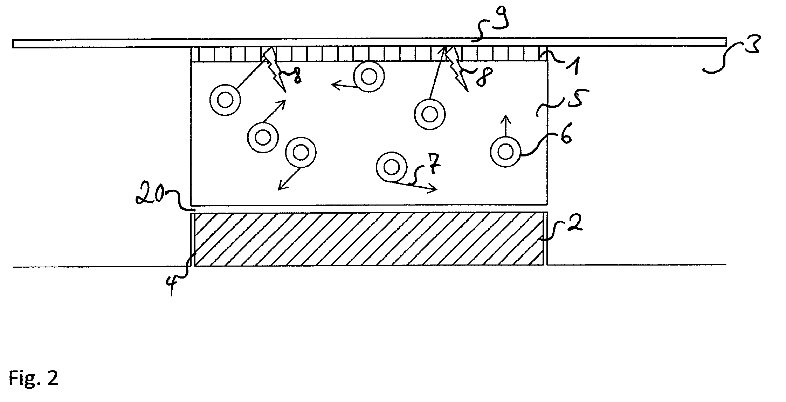

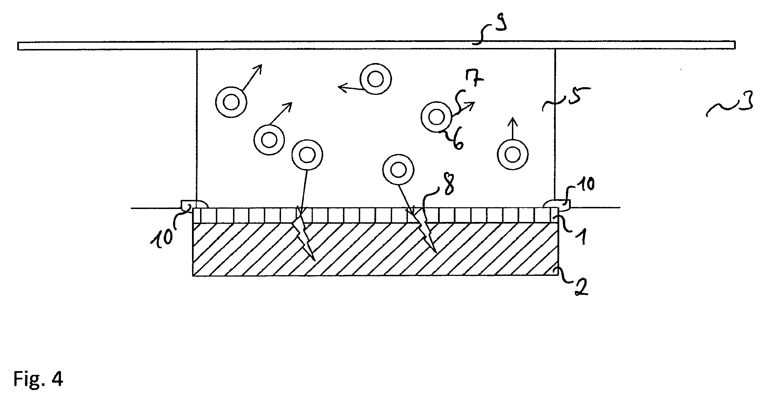

In Fig. 2 ist in einer Fig. 1 entsprechenden Seitenansicht ein weiteres Ausführungsbeispiel der Messvorrichtung gezeigt. Wiederkehrende Merkmale sind in dieser Figur wie auch in den folgenden Figuren mit identischen Bezugszeichen versehen. Abweichend von dem in Fig. 1 dargestellten Ausführungsbeispiel befindet sich nun in der Ausnehmung 4 nur die Aufnahmeeinheit 2, während das Szintillationsmaterial 1 an der Abdeckung 9 an einem oberen Rand des Aufnahmeraums 5 angeordnet ist, die Abmessungen bleiben gegenüber dem in der vorhergehenden Figur dargestellten Ausführungsbeispiel unverändert. Außerdem ist die Auswerteeinheit 21 außerhalb des Trägerkörpers 3 angeordnet. Die Aufnahmeeinheit 2 befindet sich in direktem Kontakt mit der Wand 20, ist jedoch durch den Aufnahmeraum 5 von dem Szintillationsmaterial 1 beabstandet. Ein Abstand zwischen der Aufnahmeeinheit 2 und dem Szintillationsmaterial 1 beträgt hierbei wie auch in dem in Fig. 4 gezeigten Ausführungsbeispiel zwischen 1 mm und 2 mm. Hierbei ist ein Abstand zwischen der der Flüssigkeit zugewandten Oberfläche des Szintillationsmaterials 1 und der Flüssigkeit in dem Aufnahmeraum 5 gleich null und somit kleiner als ein Abstand zwischen der Flüssigkeit zugewandten Oberfläche der lichtempfindlichen Aufnahmeeinheit 2 und der Flüssigkeit in dem Aufnahmeraum 5. In weiteren Ausführungsbeispielen können beide Abstände auch gleich groß sein.

Wie auch in dem in Fig. 1 dargestellten Ausführungsbeispiel liegen die Lichtblitze 8 als Teil der Messstrahlung in einem optisch wahrnehmbaren Bereich zwischen 300 nm und 800 nm. Ein Wellenlängenbereich der Messstrahlung kann jedoch nicht nur diesen optisch wahrnehmbaren Bereich, sondern auch einen ultravioletten Bereich oder einen infraroten Bereich umfassen. Durch die in den Fign. 1 und 2 dargestellten Ausführungsbeispiele können Informationen über einen Zyklus der Proteinsynthese erhalten werden, wobei die lichtempfindliche Aufnahmeeinheit 2 die Intensität der Lichtblitze 8 durch mehrere, auf der Aufnahmeeinheit 2 räumlich verteilte Messpunkte erfasst. Diese Messpunkte sind in dem dargestellten Ausführungsbeispiel Pixel des CMOS-Kamerachips. Hiermit wird sowohl eine Ortsauflösung durch die Messpunkte als auch eine Quantität der zu untersuchenden Substanz durch die Anzahl der registrierten Ereignisse detektiert. Einzelne der Pixel können durch sogenannte "Binning" zusammengefasst werden, um eine höhere Empfindlichkeit gegenüber schwachen Lichtblitzen 8 zu erhalten, wobei im Gegenzug die Ortsauflösung entsprechend verringert wird. Auf Kosten der Ortsauflösung wird somit ein von der Aufnahmeeinheit 2 detektiertes Signal aufintegriert. Wie in dem in Fig. 2 dargestellten Ausführungsbeispiel bereits angedeutet, kann auf die Abdeckung 9 verzichtet werden und das Szintillationsmaterial 1 oder die Aufnahmeeinheit 2 als Abdeckung des Aufnahmeraums 5 gegen ein Austreten der Flüssigkeit dienen.

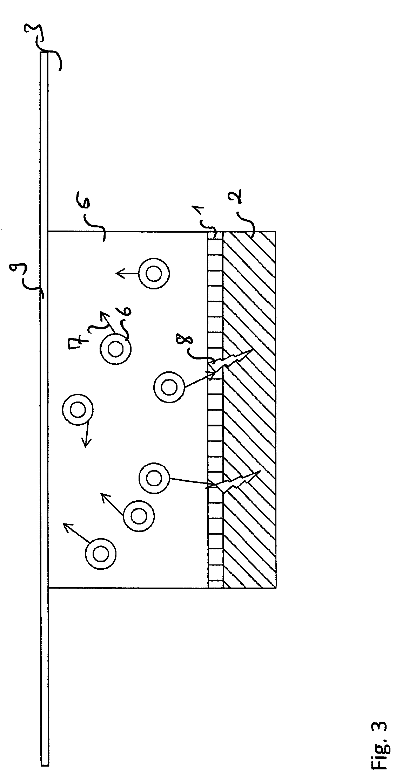

Ein weiteres Ausführungsbeispiel ist in Fig. 3 ebenfalls in einer Fig. 1 entsprechenden Seitenansicht dargestellt. Die Abmessungen entsprechen den bereits beschriebenen Ausführungsbeispielen. Das Szintillationsmaterial 1 ist nun wiederum unmittelbar auf der Aufnahmeeinheit 2 aufgebracht, das Szintillationsmaterial 1 steht jedoch im Gegensatz zu dem in Fig. 1 dargestellten Ausführungsbeispiel in unmittelbarem Kontakt mit der Flüssigkeit in dem Aufnahmeraum 5. Die Abdeckung 9 bildet wiederum eine obere Wand des Aufnahmeraums 5, während die untere Wand wegfällt und die Begrenzung des Aufnahmeraums 5 direkt durch das Szintillationsmaterial 1 gegeben ist. Hierbei kann beispielsweise direkt in den Trägerkörper 3 eine Fertigung einer Ausnehmung erfolgen, z. B. durch Fräsen, in die sowohl die Aufnahmeeinheit 2 als auch das Szintillationsmaterial 1 eingebracht wird und die verbliebene Ausnehmung den Aufnahmeraum 5 bildet.

Fig. 4 zeigt ein weiteres Ausführungsbeispiel der in Fig. 3 in Seitenansicht bereits gezeigten Messvorrichtung. Die Abmessungen entsprechen wiederum den bereits beschriebenen Ausführungsbeispielen. Im Gegensatz zu dem in Fig. 3 dargestellten Ausführungsbeispiel weist der Trägerkörper 3 nun eine Ausnehmung lediglich für den Aufnahmeraum 5 auf. Als unteres Ende des Aufnahmeraums 5 dient wiederum das Szintillationsmaterial 1, welches durch eine Klebeverbindung 10 mit dem Trägerkörper 3 verbunden ist. Die Klebeverbindung 10 dichtet, gemeinsam mit dem Szintillationsmaterial 1, den Aufnahmeraum 5 nach unten gegen ein Austreten der Flüssigkeit ab. Die Aufnahmeeinheit 2 ist wiederum unmittelbar unterhalb des Szintillationsmaterials 1 angeordnet. Zum Aufbringen des Szintillationsmaterials 1 auf die Aufnahmeeinheit 2 kann die dem Szintillationsmaterial 1 zugewandte Oberfläche der Aufnahmeeinheit 2 durch eine Plasmaaktivierung vorbereitet werden, um ein einfacheres Verbinden des Szintillationsmaterials 1 mit dieser Oberfläche zu ermöglichen.

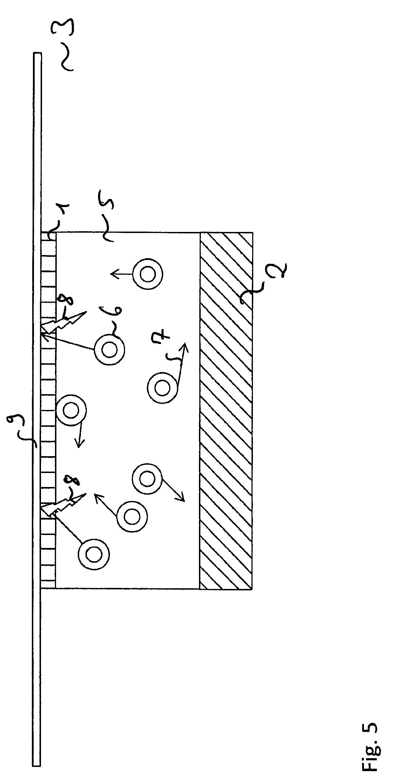

In Fig. 5 ist in einer Seitenansicht als Querschnitt durch die Messvorrichtung ein weiteres Ausführungsbeispiel dargestellt. Der Trägerkörper 3 weist wiederum eine Aussparung auf, an deren unterem Ende die Aufnahmeeinheit 2 positioniert ist, unmittelbar darüber jedoch der Aufnahmeraum 5 verläuft. Die Aufnahmeeinheit 2 steht somit in direktem Kontakt mit der Flüssigkeit. Eine obere Begrenzung des Aufnahmeraums 5 bildet das als löcherfreie Schicht ausgebildete Szintillationsmaterial 1, die ebenfalls in direktem Kontakt mit der Flüssigkeit steht, jedoch an der Abdeckung 9 angeordnet ist. Der Abstand zwischen der Flüssigkeit und dem Szintillationsmaterial 1 und zwischen der Flüssigkeit und der Aufnahmeeinheit 2 ist somit gerade gleich groß, da beide in unmittelbarem Kontakt mit der Flüssigkeit stehen. Zwar muss in dem in Fig. 5 gezeigten Ausführungsbeispiel ebenso wie in dem in Fig. 2 gezeigten Ausführungsbeispiel das Licht der Lichtblitze 8 jeweils den Aufnahmeraum 5 komplett durchlaufen, bis es auf der Aufnahmeeinheit 2 detektiert wird, jedoch kann dieser Nachteil durch "Binning" zumindest teilweise kompensiert werden.

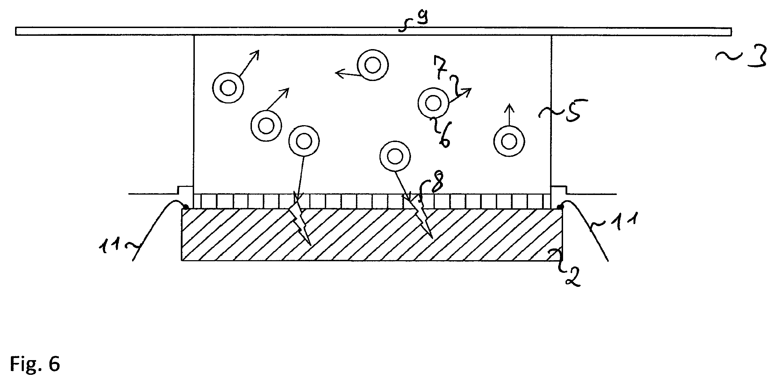

Fig. 6 zeigt in einer Fig. 3 entsprechenden Seitenansicht die Messvorrichtung im Querschnitt, wobei die Aufnahmeeinheit 2 durch links und rechts von der Aufnahmeeinheit 2 verlaufende Bonddrähte 11 mit einer unterhalb der Aufnahmeeinheit 2 verlaufenden Leiterplatte oder einem anderen Element zur elektronischen oder elektrischen Kontaktierung der Aufnahmeeinheit 2 in Verbindung stehen. Die Bonddrähte 11 weisen einen Ballbond der Bondverbindung auf einer oberen Oberfläche der Aufnahmeeinheit 2 auf. Das in der Fig. 6 dargestellte Ausführungsbeispiel weist ebenfalls eine hohe Empfindlichkeit des Messsystems auf, da die bei der Szintillation erzeugten Lichtblitze 8 direkt über der Oberfläche der Aufnahmeeinheit 2 entstehen und nicht erst über verlustreiche Strecken zu dieser geleitet werden müssen.

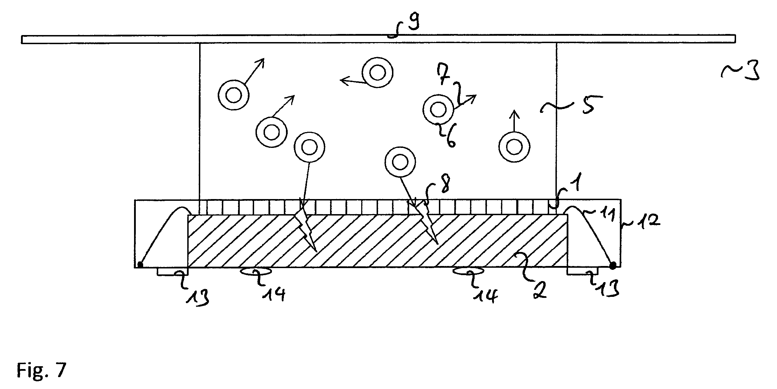

In Fig. 7 ist eine weitere Ausführungsform in einer Fig. 6 entsprechenden Darstellung gezeigt. Die Aufnahmeeinheit 2 ist wiederum durch die Bonddrähte 11 verbunden, die nun jedoch mit dem Ballbond an einem Gehäuse 12 enden. In dem Gehäuse 12 ist die Aufnahmeeinheit 2 sowie das Szintillationsmaterial 1 zusammen mit den Bonddrähten 11 angeordnet, d. h. mit Epoxidharz verkapselt, also hermetisch in dem Gehäuse 12 eingeschlossen. Das Gehäuse 12 selbst kann mit Kunststoffen oder Kunstharzen ausgegossen sein. Außerhalb des Gehäuses 12 sind Bauteile 13 sowie Lötverbindungen 14 zur Verbindung des Gehäuses 12 und der darin liegenden Bauteile mit einer elektrischen bzw. elektronischen Schaltung.

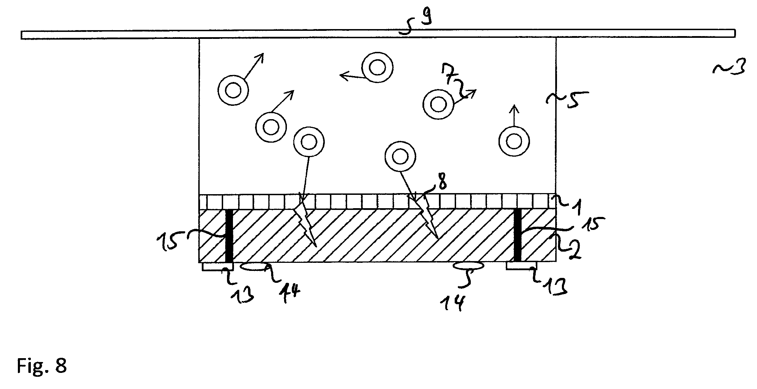

In seitlicher Ansicht ist in Fig. 8 ein weiteres Ausführungsbeispiel dargestellt, das dem in Fig. 3 gezeigten Ausführungsbeispiel entspricht, bei dem jedoch eine Siliziumdurchkontaktierung 15 als "Through-Silicon-Via" (TSV) von dem Szintillationsmaterial 1 die Aufnahmeeinheit 2 komplett von einer Oberseite zu einer Unterseite durchläuft und an der Utnerseite der Aufnahmeeinheit 2 an den Bauteilen 13 endet. Ein Kanal für die Siliziumdurchkontaktierung 15 kann durch einen Bosch-Prozess oder anisotropes Ätzen mit KOH erzeugt werden. Durch die Siliziumdurchkontaktierung 15 kann auf Bonddrähte verzichtet werden. An einem Ende der Siliziumdurchkontaktierung 15 sind Anschlüsse 13 zur weiteren elektrischen Verbindung angeordnet. Die Aufnahmeeinheit 2 weist ebenfalls an ihrem unteren Ende zwei Lötverbindungen 14 auf, so dass eine einfache Kontaktierung an eine unterhalb der Aufnahmeeinheit 2 gelegene Schaltung, beispielsweise zum Weiterführen der gemessenen Signale an die Auswerteeinheit, möglich ist. Die Auswerteeinheit 21 ermittelt die Menge der zu untersuchenden Substanz in dem Aufnahmeraum 5 sowie die lokale räumliche Verteilung.

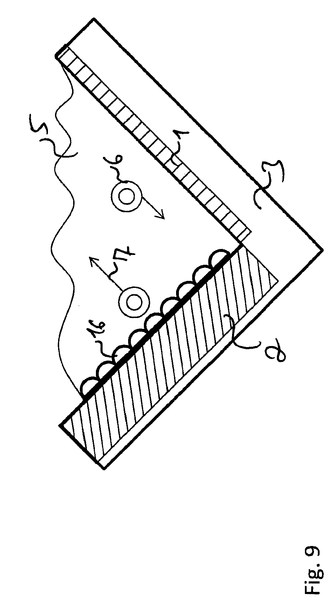

Fig. 9 zeigt ein Ausführungsbeispiel, bei dem der Trägerkörper 3 lediglich zwei Wände des nach oben offenen Aufnahmeraums 5 umfasst. In Ausnehmungen der Wände des Trägerkörpers 3 sind das Szintillationsmaterial 1 und die Aufnahmeeinheit 2 eingebracht, diese liegen einander jedoch nun nicht mehr fluchtend gegenüber, sondern sind gegeneinander im rechten Winkel abgewinkelt. Das Szintillationsmaterial 1 steht somit senkrecht zu der Aufnahmeeinheit 2 und liegt der Aufnahmeeinheit 2 abgewinkelt gegenüber. In dem V-förmigen und nach oben offenen Aufnahmeraum 5 ist die Flüssigkeit mit den darin in Suspension enthaltenen Vesikeln 6 geführt. In weiteren Ausführungsbeispielen kann in dem in Fig. 9 gezeigten Aufbau auch die Abdeckung 9 zum oberen Abschluss des Aufnahmeraums 5 vorgesehen sein. Da einer der Lichtblitze 8 nun nur noch mit geringer Wahrscheinlichkeit die Aufnahmeeinheit 2 erreicht, sind auf der der Flüssigkeit zugewandten Oberfläche der Aufnahmeeinheit 2 mehrere Mikrolinsen 16 als Mikrolinsenarray aufgebracht, die die auftreffenden Lichtblitze 8 gebündelt auf die Aufnahmeeinheit 2 leiten. Die Mikrolinsen 16 können natürlich auch in den in den anderen Figuren offenbarten Ausführungsbeispielen auf der Aufnahmeeinheit 2 angeordnet sein. Die Mikrolinsen 16 bedecken die Aufnahmeeinheit 2 vollständig, können in weiteren Ausführungsbeispielen aber natürlich die Aufnahmeeinheit 2 auch nur teilweise bedecken. Die Mikrolinsen 2 sind in unmittelbarem berührendem Kontakt mit der Aufnahmeeinheit 2 und weisen in dem dargestellten Ausführungsbeispiel einen Durchmesser von 10 µm auf.

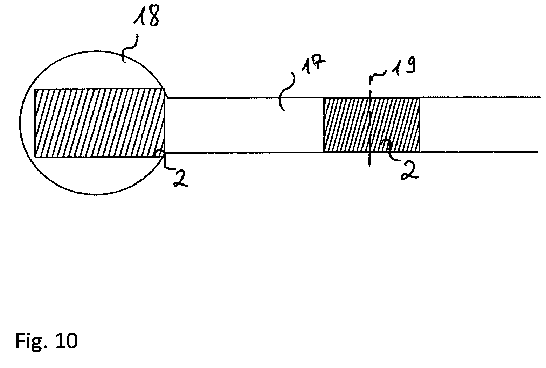

Eine Draufsicht auf eine Fluidikvorrichtung, die die beschriebene Messvorrichtung umfasst, ist in Fig. 10 gezeigt. Die Fluidikvorrichtung ist als Kanalreaktor aufgebaut, kann in weiteren Ausführungsbeispielen aber auch ein Tropfenreaktor sein, bei dem ein einzelner Flüssigkeitstropfen bewegt und analysiert wird. Die Fluidikvorrichtung ist ein flaches Plättchen aus Polymethylmethacrylat und umfasst einen eingefrästen Kanal 17 mit einer Breite von 1 mm, durch den die Flüssigkeit mit den Vesikeln 6 geführt wird. In weiteren Ausführungsbeispielen kann der Kanal 17 auch durch Prägen oder bereits bei einem Spritzgießen des Plättchens hergestellt werden. Der Kanal 17 endet in einem kreisrunden Reaktionsraum 18, in dem die zu untersuchende Substanz reagiert. In dem Kanal 17 ist auf dem Boden eine Aufnahmeeinheit 2 mit einem darüber liegenden Szintillationsmaterial 1 angeordnet. Die in den vorherigen Figuren gezeigten Querschnitte sind Querschnitte entlang einer Linie 19.

Das Szintillationsmaterial 1 kann entweder unmittelbar auf der Aufnahmeeinheit 2 aufgebracht sein oder eine obere Abdeckung des Kanals bilden. Ebenso ist die Aufnahmeeinheit 2 in dem Reaktionsraum 18 vorgesehen, die eine Länge und eine Breite von zwischen 5 mm bis 7 mm aufweist. Durch die Aufnahmeeinheit 2 können auch Diffusionskoeffizienten der Flüssigkeit in dem Reaktionsraum 18 bestimmt werden. Auch hier kann das Szintillationsmaterial 1 unmittelbar auf der Aufnahmeeinheit 2 aufgebracht sein oder eine obere Abdeckung des Reaktionsraums 18 gegen ein Austreten der Flüssigkeit bilden. Der Reaktionsraum 18 ist somit ein Mikroreaktor, wobei, durch die Messung der Menge der zu untersuchenden Substanz an unterschiedlichen Punkten, d.h. einmal bei Zuführung zu dem Reaktionsraum und einmal in dem Reaktionsraum selbst, die Reaktion nachverfolgt werden kann und nicht nur eine quantitative Analyse der zu untersuchenden Substanz sondern auch eine lokale Verteilung der zu untersuchenden Substanz durch die Ortsauflösung der Aufnahmeeinheit 2 nachvollzogen werden kann.

Lediglich in den Ausführungsbeispielen offenbarte Merkmale der verschiedenen Ausführungsformen können miteinander kombiniert und einzeln beansprucht werden.

## Patentansprüche

1. Messvorrichtung zum Messen einer Menge einer zu untersuchenden Substanz (6), die mit einem radioaktiven Material markiert ist, umfassend einen durch Wände eingefassten Aufnahmeraum (5) zum Aufnehmen einer Flüssigkeit, die die zu untersuchende Substanz (6) umfasst, ein Szintillationsmaterial (1) zum Umwandeln einer von dem radioaktiven Material ausgehenden ionisierenden Strahlung (7) in eine Messstrahlung (8) und eine lichtempfindliche Aufnahmeeinheit (2) zum Detektieren einer Intensität der Messstrahlung (8),
**dadurch gekennzeichnet, dass**
die lichtempfindliche Aufnahmeeinheit (2) als Halbleiterelement mit einer flächig ausgedehnten Oberfläche ausgebildet ist und das Szintillationsmaterial (1) eine der Flüssigkeit zugewandte, flächig ausgedehnte Oberfläche aufweist, wobei die lichtempfindliche Aufnahmeeinheit (2) und das Szintillationsmaterial (1) einander gegenüberliegend an jeweils einer der Wände oder übereinanderliegend an einer der Wände angeordnet sind.

2. Messvorrichtung nach Anspruch 1, **dadurch gekennzeichnet, dass** zum gleichzeitigen Messen der Menge und einer Position der zu untersuchenden Substanz (6) die lichtempfindliche Aufnahmeeinheit (2) eingerichtet ist, die Intensität der Messstrahlung (8) an mehreren, auf der lichtempfindlichen Aufnahmeeinheit (2) räumlich verteilten Messpunkten zu erfassen.

3. Messvorrichtung nach Anspruch 2, **dadurch gekennzeichnet, dass** eine Auswerteeinheit (21) vorgesehen ist zum Berechnen der Menge und einer lokalen Verteilung der zu untersuchenden Substanz (6) aus der an den Messpunkten erfassten Intensität der Messstrahlung (8).

4. Messvorrichtung nach einem der vorhergehenden Ansprüche, **dadurch gekennzeichnet, dass** das Szintillationsmaterial (1) direkt als Schicht auf die lichtempfindliche Aufnahmeeinheit (2) aufgebracht ist und das Szintillationsmaterial (1) und die lichtempfindliche Aufnahmeeinheit (2) direkt übereinanderliegend an einer der Wände angeordnet sind.

5. Messvorrichtung nach einem der vorhergehenden Ansprüche, **dadurch gekennzeichnet, dass** die lichtempfindliche Aufnahmeeinheit (2) und/oder das Szintillationsmaterial (1) eine Abdeckung des Aufnahmeraums gegen ein Austreten der Flüssigkeit bildet.

6. Messvorrichtung nach einem der vorhergehenden Ansprüche, **dadurch gekennzeichnet, dass** ein Abstand zwischen der der Flüssigkeit zugewandten Oberfläche des Szintillationsmaterials (1) und der Flüssigkeit kleiner oder gleich einem Abstand zwischen der der Flüssigkeit zugewandten Oberfläche der lichtempfindlichen Aufnahmeeinheit (2) und der Flüssigkeit ist.

7. Messvorrichtung nach einem der vorhergehenden Ansprüche, **dadurch gekennzeichnet, dass** Anschlüsse (13) des Halbleiterelements als eine Durchkontaktierung (15) ausgeführt sind.

8. Messvorrichtung nach einem der vorhergehenden Ansprüche, **gekennzeichnet durch** einen Trägerkörper (3), in den der Aufnahmeraum (5) eingearbeitet ist, wobei benachbart zum Aufnahmeraum (5) der Trägerkörper (3) eine Ausnehmung (4) aufweist, in der die lichtempfindliche Aufnahmeeinheit (2) und/oder das Szintillationsmaterial (1) aufgenommen ist.

9. Messvorrichtung nach einem der vorhergehenden Ansprüche, **dadurch gekennzeichnet, dass** optische Elemente, vorzugsweise Mikrolinsen (16), auf der Aufnahmeeinheit (2) angeordnet sind zum Bündeln der Messstrahlung auf der Aufnahmeeinheit (2).

10. Messvorrichtung nach einem der vorhergehenden Ansprüche, **dadurch gekennzeichnet, dass** die radioaktive Substanz ¹⁴C umfasst und das Szintillationsmaterial (1) zur Detektion von β-Strahlung eingerichtet ist und/oder die zu untersuchende Substanz (6) ein synthetisiertes Protein umfasst und das radioaktive Material eine radioaktiv markierte Aminosäure ist, die in das Protein synthetisiert ist, wobei die zu untersuchende Substanz (6) vorzugsweise in einem oder mehreren Vesikeln agglomeriert ist.

11. Messvorrichtung nach einem der vorhergehenden Ansprüche, **dadurch gekennzeichnet, dass** die lichtempfindliche Aufnahmeeinheit (2) ein Empfängerarray aufweist und vorzugsweise als CCD-Element, CMOS-Element oder sCMOS-Element ausgebildet ist.

12. Messvorrichtung nach einem der vorhergehenden Ansprüche, **dadurch gekennzeichnet, dass** ein Volumen des Aufnahmeraums (5) zwischen 1 mm³ und 10 mm³, vorzugsweise zwischen 2,5 mm³ und 7,5 mm³, besonders vorzugsweise zwischen 3 mm³ und 6 mm³ beträgt.

13. Fluidikvorrichtung, umfassend eine Messvorrichtung nach einem der vorhergehenden Ansprüche und vorzugsweise einen Tropfenreaktor oder einen Kanalreaktor aufweisend.

## Claims

1. A measuring device for measuring a quantity of a substance (6) which is to be investigated which is marked with a radioactive material, comprising a receiving space (5), bordered by walls, for receiving a liquid which comprises the substance (6) to be investigated, a scintillation material (1) for converting an ionising radiation (7) coming from the radioactive material into a measuring radiation (8), and a light-sensitive recording unit (2) for detecting an intensity of the measuring radiation (8), **characterised in that**
the light-sensitive recording unit (2) is formed as a semiconductor element with a two-dimensionally expanded surface and the scintillation material (1) has a two-dimensionally expanded surface facing the liquid, the light-sensitive recording unit (2) and the scintillation material (1) being arranged lying opposite one another on one of the walls in each case or lying one above another on one of the walls.

2. A measuring device according to Claim 1, **characterised in that** for simultaneously measuring the quantity and a position of the substance (6) to be investigated, the light-sensitive recording unit (2) is set up to detect the intensity of the measuring radiation (8) at a plurality of measuring points spatially distributed over the light-sensitive recording unit (2).

3. A measuring device according to Claim 2, **characterised in that** an evaluation unit (21) is provided for calculating the quantity and a local distribution of the substance (6) to be investigated from the intensity of the measuring radiation (8) detected at the measuring points.

4. A measuring device according to one of the preceding claims, **characterised in that** the scintillation material (1) is applied to the light-sensitive recording unit (2) directly as a layer and the scintillation material (1) and the light-sensitive recording unit (2) are arranged directly lying one above another on one of the walls.

5. A measuring device according to one of the preceding claims, **characterised in that** the light-sensitive recording unit (2) and/or the scintillation material (1) forms a covering of the receiving space against emergence of the liquid.

6. A measuring device according to one of the preceding claims, **characterised in that** a distance between the surface of the scintillation material (1) facing the liquid and the liquid is less than or equal to a distance between the surface of the light-sensitive recording unit (2) facing the liquid and the liquid.

7. A measuring device according to one of the preceding claims, **characterised in that** connections (13) of the semiconductor element are embodied as a through-contact (15).

8. A measuring device according to one of the preceding claims, **characterised by** a support body (3) into which the receiving space (5) is incorporated, the support body (3) having a cutout (4) adjacent to the receiving space (5) in which the light-sensitive recording unit (2) and/or the scintillation material (1) is received.

9. A measuring device according to one of the preceding claims, **characterised in that** optical elements, preferably microlenses (16), are arranged on the recording unit (2) to focus the measuring radiation on the receiving unit (2).

10. A measuring device according to one of the preceding claims, **characterised in that** the radioactive substance comprises ¹⁴C and the scintillation material (1) is set up to detect β-radiation and/or the substance (6) to be investigated comprises a synthesised protein and the radioactive material is a radioactively marked amino acid which is synthesised into the protein, the substance (6) to be investigated preferably being agglomerated in one or more vesicles.

11. A measuring device according to one of the preceding claims, **characterised in that** the light-sensitive recording unit (2) has a receiver array and is preferably formed as a CCD element, CMOS element or sCMOS element.

12. A measuring device according to one of the preceding claims, **characterised in that** a volume of the receiving space (5) is between 1 mm³ and 10 mm³, preferably between 2.5 mm³ and 7.5 mm³, particularly preferably between 3 mm³ and 6 mm³.

13. A fluidic device, comprising a measuring device according to one of the preceding claims, and preferably having a droplet reactor or a channel reactor.

## Revendications

1. Dispositif de mesure pour la mesure d'une quantité d'une substance (6) à étudier, qui est marquée avec un matériau radioactif, comprenant un espace de logement (5) entouré de parois pour le logement d'un liquide, qui comprend la substance (6) à étudier, un matériau de scintillation (1) pour la transformation d'un rayonnement ionisant (7) émis par le matériau radioactif en un rayonnement de mesure (8) et une unité d'enregistrement photosensible (2) pour la détection d'une intensité du rayonnement de mesure (8), **caractérisé en ce que**
l'unité d'enregistrement photosensible (2) est conçue comme un élément semi-conducteur avec une surface s'étendant à plat et le matériau de scintillation (1) comprenant une surface s'étendant à plat, orientée vers le liquide, l'unité d'enregistrement photosensible (2) et le matériau de scintillation (1) étant disposés face à face sur chacune des parois ou de manière superposée sur l'une des parois.

2. Dispositif de mesure selon la revendication 1, **caractérisé en ce que**, pour la mesure simultanée de la quantité et d'une position de la substance (6) à étudier, l'unité d'enregistrement photosensible (2) est conçue pour mesurer l'intensité du rayonnement de mesure (8) au niveau de plusieurs points de mesure répartis spatialement sur l'unité d'enregistrement photosensible (2).

3. Dispositif de mesure selon la revendication 2, **caractérisé en ce qu'**une unité d'analyse (21) est prévue pour le calcul de la quantité et d'une répartition locale de la substance (6) à étudier à partir de l'intensité du rayonnement de mesure (8) déterminée au niveau des points de mesure.

4. Dispositif de mesure selon l'une des revendications précédentes, **caractérisé en ce que** le matériau de scintillation (1) est appliqué directement, sous la forme d'une couche, sur l'unité d'enregistrement photosensible (2) et le matériau de scintillation (1) et l'unité d'enregistrement photosensible (2) sont disposés directement de manière superposée sur l'une des parois.

5. Dispositif de mesure selon l'une des revendications précédentes, **caractérisé en ce que** l'unité d'enregistrement photosensible (2) et/ou le matériau de scintillation (1) forme(nt) un recouvrement de l'espace de logement contre une sortie du liquide.

6. Dispositif de mesure selon l'une des revendications précédentes, **caractérisé en ce qu'**une distance entre la surface, orientée vers le liquide, du matériau de scintillation (1) et le liquide est inférieure ou égale à une distance entre la surface, orientée vers le liquide, de l'unité d'enregistrement photosensible (2) et du liquide.

7. Dispositif de mesure selon l'une des revendications précédentes, **caractérisé en ce que** des raccordements (13) de l'élément semi-conducteur sont conçus comme des contacts traversant (15).

8. Dispositif de mesure selon l'une des revendications précédentes, **caractérisé par** un corps de support (3), dans lequel l'espace de logement (5) est aménagé, le corps de support (3) comprenant, à proximité de l'espace de logement (5), un évidement (4), dans lequel est logé(e) l'unité d'enregistrement photosensible (2) et/ou le matériau de scintillation (1).

9. Dispositif de mesure selon l'une des revendications précédentes, **caractérisé en ce que** des éléments optiques, de préférence des micro-lentilles (16), sont disposées sur l'unité d'enregistrement (2) pour la focalisation du rayonnement de mesure sur l'unité d'enregistrement (2).

10. Dispositif de mesure selon l'une des revendications précédentes, **caractérisé en ce que** la substance radioactive comprend du ¹⁴C et le matériau de scintillation (1) est conçu pour la détection d'un rayonnement β et/ou la substance à étudier (6) comprend une protéine synthétisée et le matériau radioactif est un acide aminé marqué de manière radioactive, qui est synthétisé dans la protéine, la substance (6) à étudier étant de préférence agglomérée en une ou plusieurs vésicules.

11. Dispositif de mesure selon l'une des revendications précédentes, **caractérisé en ce que** l'unité d'enregistrement (2) comprend un ensemble de récepteurs et est conçue de préférence sous la forme d'un élément CCD, d'un élément CMOS, ou d'un élément sCMOS.

12. Dispositif de mesure selon l'une des revendications précédentes, **caractérisé en ce qu'**un volume de l'espace de logement (5) est entre 1 mm³ et 10 mm³, de préférence entre 2,5 mm³ et 7,5 mm³, plus particulièrement de préférence entre 3 mm³ et 6 mm³.

13. Dispositif fluidique comprenant un dispositif de mesure selon l'une des revendications précédentes et comprenant de préférence un réacteur à gouttes ou un réacteur à canal.
